# EUROPÄISCHE PATENTSCHRIFT

(11) **EP 0 805 165 B1**
(45) Veröffentlichungstag und Bekanntmachung des Hinweises auf die Patenterteilung: **11.08.1999**
(21) Anmeldenummer: 97107021.4
(22) Anmeldetag: 28.04.1997
(51) Int. Cl.: C08F 6/08, C08F 10/00, C08F 4/64

(54) **Verfahren zur Wiedergewinnung von Metallocenkomplexen**
Process for recovering metallocene complexes
Procédé de récupération de complexes metallocènes

(30) Priorität: 04.05.1996 DE 19618007
(43) Veröffentlichungstag der Anmeldung: 05.11.1997
(73) Patentinhaber: BASF AKTIENGESELLSCHAFT, 67056 Ludwigshafen (DE)
(72) Erfinder: Kristen, Marc Oliver, Dr., 67117 Limburgerhof (DE); Jutzi, Peter, Prof. Dr., 33613 Bielefeld (DE); Redeker, Thomas, 33611 Bielefeld (DE)

(56) Entgegenhaltungen:
- DE-A- 19 602 543
- US-A- 5 428 127
- US-A- 5 432 242
- DATABASE WPI Section Ch, Week 9405 Derwent Publications Ltd., London, GB; Class A12, AN 94-041130 XP002036848 & SU 666 784 A (PETROCHEM SYNTHESIS INST) , 15.November 1992
- FLORES J C ET AL: "2-(DIMETHYLAMINO)ETHYLCYCLOPENTADIENYLTRI CHLOROTITANIUM: A NEW TYPE OF OLEFIN POLYMERIZATION CATALYST" ORGANOMETALLICS, Bd. 13, Nr. 11, November 1994, Seiten 4140-4142, XP000671499

## Beschreibung

Die vorliegende Erfindung betrifft Verfahren zur Wiedergewinnung von Metallocenkomplexen der allgemeinen Formel I 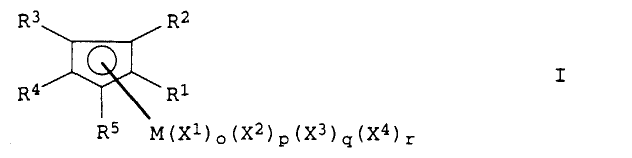 in der die Substituenten und Indices folgende Bedeutung haben:
- M: Titan, Zirkonium, Hafnium, Vanadium, Niob oder Tantal,
- R¹ bis R⁴: Wasserstoff, C₁₋ bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, 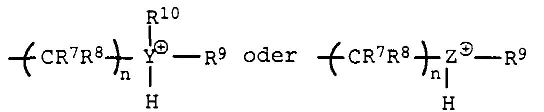
mit
- R⁶: C₁- bis C₁₀-Alkyl, C₆- bis C₁₅-Aryl oder C₃- bis C₁₀-Cycloalkyl,
- R⁷ und R⁸: Wasserstoff, C₁- bis C₁₀-Alkyl, C₆- bis C₁₅-Aryl oder C₃- bis C₁₀-Cycloalkyl,
- R⁹ und R¹⁰: C₁- bis C₁₀-Alkyl, C₆- bis C₁₅-Aryl oder C₃- bis C₁₀-Cycloalkyl,
- Y: Stickstoff, Phosphor, Arsen, Antimon oder Wismut,
- Z: Sauerstoff, Schwefel, Selen oder Tellur,
- n: eine ganze Zahl im Bereich von 0 bis 10,
- R⁵: 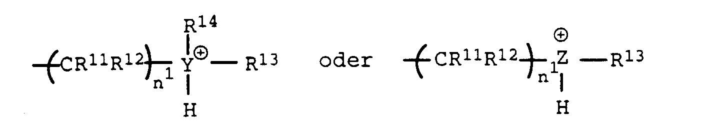
mit
- R¹¹ und R¹²: Wasserstoff, C₁- bis C₁₀-Alkyl, C₆- bis C₁₅-Aryl oder C₃- bis C₁₀-Cycloalkyl,
- R¹³ und R¹⁴: C₁- bis C₁₀-Alkyl, C₆- bis C₁₅-Aryl oder C₃- bis C₁₀-Cycloalkyl,
- n¹: eine ganze Zahl im Bereich von 0 bis 10,
- X¹ bis X⁴: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁵-, -NR¹⁵R¹⁶ oder 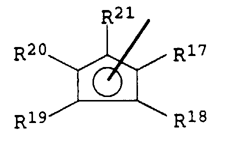
mit
- R¹⁵ und R¹⁶: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- R¹⁷ bis R²¹: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atomen aufweisende cyclische Gruppen stehen können, Si(R²²)₃, 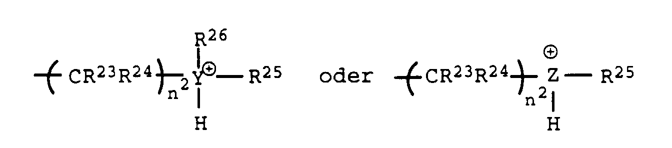
mit
- R²²: C₁- bis C₁₀-Alkyl, C₆- bis C₁₅-Aryl oder C₃- bis C₁₀-Cycloalkyl,
- R²³ und R²⁴: Wasserstoff, C₁- bis C₁₀-Alkyl, C₆- bis C₁₅-Aryl oder C₃- bis C₁₀-Cycloalkyl,
- R²⁵ und R²⁶: C₁- bis C₁₀-Alkyl, C₆- bis C₁₅-Aryl oder C₃- bis C₁₀-Cycloalkyl,
- n²: eine ganze Zahl im Bereich von 0 bis 10
und
- o, p, q, r: ganze Zahlen im Bereich von 0 bis 4, wobei die Summe o+p+q+r+1 der Wertigkeit von M entspricht,
die als aktive Katalysatorbestandteile bei der Herstellung von Polymerisaten von C₂- bis C₁₀-Alkenen eingesetzt waren.

Weiterhin betrifft die vorliegende Erfindung die Verwendung der wiedergewonnenen Metallocenkomplexe zur Herstellung von Polymerisaten von C₂- bis C₁₀-Alkenen und Verfahren zur Herstellung dieser Polymerisate.

Die Verwendung von Metallocenkomplexen als aktive Katalysatorbestandteile zur Herstellung von Polyolefinen ist bekannt. Es wurden eine Vielzahl technischer Polymerisationsverfahren entwickelt, bei denen jedoch der Metallocenkomplex im hergestellten Polymerisat verbleibt. Dadurch ist jedoch das Polymerisat mit dem Metallocenkomplex verunreinigt und zudem geht auf diese Art der teure Metallocenkomplex verloren.

US- A- 5 428 127 beschreibt ein Verfahren zum Waschen von Polypropylen, das mittels eines Metallocenkatalysators hergestellt worden ist, bei dem das Polymer unter sauren Bedingungen behandelt wird, bevor es mit einem Kohlenwasserstofflösungsmittel gewaschen wird, so daß der in dem Polymer enthaltene Katalysatorrest in dem Kohlenwasserstofflösungsmittel löslich gemacht wird. Hierdurch können die Eigenschaften des Polymeren verbessert werden.

Ausgabe der vorliegenden Erfindung war es daher, ein Verfahren zur Wiedergewinnung von Metallocenkomplexen zu finden.

Demgemäß wurden Verfahren zur Wiedergewinnung von Metallocenkomplexen der allgemeinen Formel I, die als aktive Katalysatorbestandteile bei der Herstellung von Polymerisaten von C₂- bis C₁₀- Alkenen eingesetzt waren, gefunden, wobei man die Polymerisation durch Zugabe von Säuren abbricht und die Metallocenkomplexe der allgemeinen Formel I durch Extraktion aus der Reaktionsmischung wiedergewinnt.

Weiterhin wurde die Verwendung der wiedergewonnenen Metallocenkomplexe zur Herstellung von Polymerisaten von C₂- bis C₁₀-Alkenen gefunden sowie Verfahren zur Herstellung dieser Polymerisate.

Von den bei dem erfindungsgemäßen Verfahren eingesetzten Metallocenkomplexen der allgemeinen Formel I sind diejenigen bevorzugt, bei denen
- M: für Titan, Zirkonium oder Hafnium steht, insbesondere für Titan,
- R¹ bis R⁴: für Wasserstoff, C₁- bis C₆-Alkyl, C₆- bis C₁₅-Aryl oder wobei gegebenenfalls zwei benachbarte Reste für 8 bis 12 C-Atome aufweisende cyclische Gruppen stehen, insbesondere für Wasserstoff,
- R⁵: 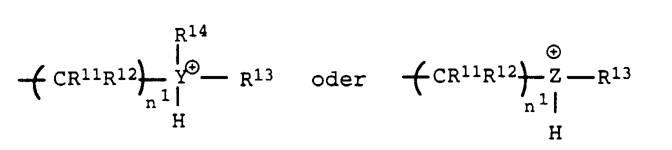 bedeutet, mit
- R¹¹ und R¹²: Wasserstoff oder C₁- bis C₄-Alkyl, insbesondere Wasserstoff, Methyl oder Ethyl,
- R¹³ und R¹⁴: C₁- bis C₆-Alkyl, insbesondere Methyl, Ethyl, n-Propyl, iso-Propyl, n-Butyl oder tert.-Butyl oder Phenyl,
- n¹: eine ganze Zahl im Bereich von 1 bis 4,
- Y: Stickstoff oder Phosphor,
- Z: Sauerstoff oder Schwefel,
- X¹ bis X⁴: für Chlor, C₁- bis C₄-Alkyl oder 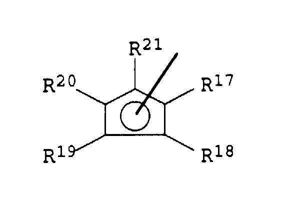 steht, mit
- R¹⁷ bis R²¹: Wasserstoff, C₁- bis C₆-Alkyl, C₆- bis C₁₅-Aryl oder wobei gegebenenfalls zwei benachbarte Reste für 8 bis 12 C-Atome aufweisende cyclische Gruppen stehen, Si(R²²)₃ oder 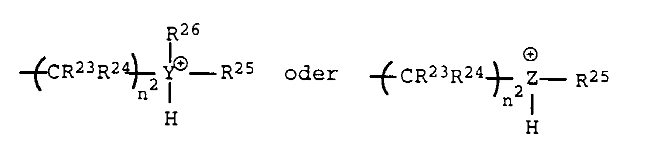
- R²²: C₁- bis C₁₀-Alkyl, bevorzugt C₁- bis C₄-Alkyl,
- R²³ und R²⁴: Wasserstoff oder C₁- bis C₄-Alkyl, insbesondere Wasserstoff, Methyl oder Ethyl,
- R²⁵ und R²⁶: C₁- bis C₆-Alkyl, insbesondere Methyl, Ethyl, n-Propyl, iso-Propyl, n-Butyl oder tert.-Butyl oder Phenyl
und
- n²: eine ganze Zahl im Bereich von 1 bis 4.

Besonders bevorzugt sind Metallocenkomplexe der allgemeinen Formel I, in denen R⁵ für 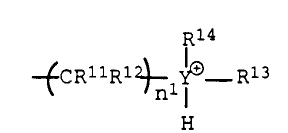 steht, insbesondere für 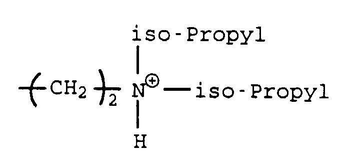 und R¹ bis R⁴ Wasserstoff bedeuten. Bevorzugt ist es auch, insbesondere wenn M für Titan steht, wenn X¹, X² und X³ für Chlor stehen und o für 1, p für 1, q für 1 und r für O oder wenn X¹ und X² für Chlor stehen und X³ 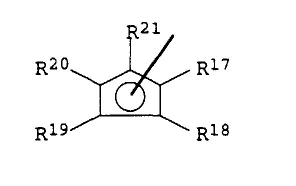 bedeutet, mit
R¹⁷ bis R²⁰ Wasserstoff und R²¹ Trimethylsilyl und o für 1, p für 1, q für 1 und r für 0 stehen.

Beispiele für besonders bevorzugte Metallocenkomplexe der allgemeinen Formel I sind:
Trichloro-η⁵-[2-(N,N-diisopropylammonium)-ethyl-cyclopentadienyl]-titanium(IV)-chlorid
Dichloro-di-{η⁵-[2-(N,N-diisopropylammonium)-ethyl-cyclopentadienyl]}-titanium(IV)-dichlorid
Trichloro-η⁵-[2-(N,N-diisopropylammonium)-ethyl-cyclopentadienyl]-zirkonium(IV)-chlorid
Dichloro-di-{η⁵-[2-(N,N-diisopropylammonium)-ethyl-cyclopentadienyl]}-zirkonium(IV)-dichlorid
Trichloro-η⁵-[2-(N,N-dimethylammonium)-ethyl-cyclopentadienyl]-titanium(IV)-chlorid
Dichloro-di-{η⁵-[2-(N,N-dimethylammonium)-ethyl-cyclopentadienyl]}-titanium(IV)-dichlorid
Trichloro-η⁵-[2-(N,N-dimethylammonium)-ethyl-cyclopentadienyl]-zirkonium(IV) -chlorid
Dichloro-di-{η⁵-[2-N,N-dimethylammonium)-ethyl-cyclopentadienyl]}-zirkonium(IV)-dichlorid
Dichloro-η⁵-[2-(N,N-diisopropylammonium)-ethyl-cyclopentadienyl]-(trimethylsilyl-cyclopentadienyl)-titanium(IV)-chlorid
Dichloro-η⁵-[2-(N,N-diisopropylammonium)-ethyl-cyclopentadienyl]-(trimethylsilylcyclopentadienyl)-zirkonium(IV)-chlorid
Dichloro-cyclopentadienyl-η⁵-[2-(N,N-diisopropylammonium)-ethylcyclopentadienyl]-titanium(IV)-chlorid
Dichloro-cyclopentadienyl-η⁵-[2-(N,N-diisopropylammonium)-ethylcyclopentadienyl]-zirkonium(IV)-chlorid

Es können auch Mischungen verschiedener Metallocenkomplexe I eingesetzt worden sein.

Die Herstellung der Metallocenkomplexe I kann so erfolgen, daß man zunächst durch Umsetzung von Cyclopentadienyl-Lithium oder Cyclopentadienyl-Natrium mit einem Heteroatom funktionalisierten Chloralkan, die mit dem Heteroatom funktionalisierten Cyclopentadienylsysteme herstellt, wie in Journal of Organometallic Chemistry, 1992, 423, 31 - 38 und Journal of Organometallic Chemistry, 1994, 480, C18 - C19 beschrieben. Anschließend kann man durch Umsetzung der mit dem Heteroatom funktionalisierten Cyclopentadienylsysteme mit Alkyllithium, beispielsweise n-Butyllithium die entsprechende mit dem Heteroatom funktionalisierten Cyclopentadienyl-Lithium-Systeme herstellen, beispielsweise in Journal of Organometallic Chemistry, 1995, 486, 287 - 289 beschrieben. Diese können nun vorzugsweise mit MCl₄ zu den entsprechenden Metallocenkomplexen umgesetzt werden, wie in Journal of Organometallic Chemistry, 1995, 486, 287 - 289 beschrieben, wobei die Metallocenkomplexe jedoch noch nicht kationisch funktionalisierte Cyclopentadienylliganden tragen. Die Umsetzung zu den Metallocenkomplexen der allgemeinen Formel I kann durch Zugabe von Säuren jeglicher Art erfolgen, wie in Journal of Organometallic Chemistry, 1995, 486, 287 - 289 beschrieben.

Durch die Zugabe dieser Säuren erhält man zu den Metallocenkomplexen der allgemeinen Formel I ein Gegenion, das sich aus der Art der zugegebenen Säure ableitet. Diese Gegenionen können beispielsweise sein: Halogenide, Carbonsäureanionen, Sulfate, Phosphate, Carbonate, Nitrate, PF₆⁻, BF₄⁻ oder HPO₄²⁻. Die Art des Gegenions ist unkritisch. Bevorzugt sind Halogenide, insbesondere Chloride.

Bei dem erfindungsgemäßen Verfahren zur Wiedergewinnung von Metallocenkomplexen der allgemeinen Formel I waren diese Metallocenkomplexe bereits als aktive Katalysatorbestandteile bei der Herstellung von Polymerisaten von C₂- bis C₁₀-Alkenen eingesetzt. Als weiterer aktiver Bestandteil enthalten die bereits eingesetzten Katalysatorsysteme noch metalloceniumionenbildende Verbindungen.

Geeignete metalloceniumionenbildende Verbindungen sind insbesondere starke, neutrale Lewissäuren, ionische Verbindungen mit lewissauren Kationen, ionische Verbindungen mit Brönsted-Säuren als Kation und Alumoxanverbindungen.

Als starke, neutrale Lewissäuren sind Verbindungen der allgemeinen Formel IV

M¹X⁵X⁶X⁷ IV

bevorzugt, in der
- M¹: ein Element der III. Hauptgruppe des Periodensystems bedeutet, insbesondere B, Al oder Ga, vorzugsweise B,
- X⁵, X⁶ und X⁷: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X⁵, X⁶ und X⁷ gleich sind, vorzugsweise Tris(pentafluorphenyl)boran.

Als ionische Verbindungen mit lewissauren Kationen sind Verbindungen der allgemeinen Formel V

[(A^{a+})Q₁Q₂...Q_{z}]^{d+} V

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Besonders geeignet als metalloceniumionenbildende Verbindung sind offenkettige oder cyclische Alumoxanverbindungen der allgemeinen Formel II oder III 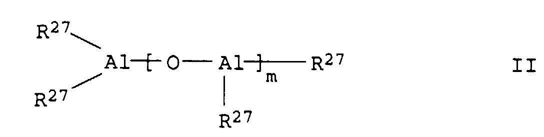 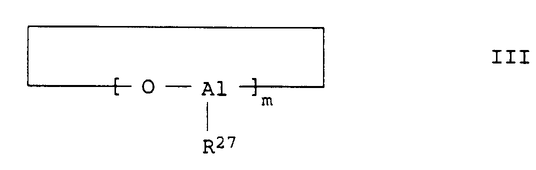 wobei
- R²⁷: eine C₁- bis C₄-Alkylgruppe bedeutet, bevorzugt Methyl- oder Ethylgruppe und
- m: für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als metalloceniumionenbildende Verbindungen Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als Lösungsmittel für diese Katalysatorsysteme werden üblicherweise aromatische Kohlenwasserstoffe eingesetzt, bevorzugt mit 6 bis 20 C-Atomen, insbesondere Xylole und Toluol sowie deren Mischungen.

Die bei dem erfindungsgemäßen Verfahren zur Wiedergewinnung eingesetzten Katalysatorsysteme können auch in geträgerter Form eingesetzt worden sein.

Als Trägermaterialien werden vorzugsweise feinteilige Träger eingesetzt, die bevorzugt einen Teilchendurchmesser im Bereich von 1 bis 300 µm aufweisen, insbesondere von 30 bis 70 µm. Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Weitere Träger sind u.a. feinteilige Polyolefine, beispielsweise feinteiliges Polypropylen oder Magnesiumchlorid.

Bei dem erfindungsgemäßen Verfahren zur Wiedergewinnung von Metallocenkomplexen der allgemeinen Formel I waren diese Metallocenkomplexe schon zur Herstellung von Polymerisaten von C₂- bis C₁₀-Alkenen eingesetzt. Diese Polymerisation kann in der Gasphase, in Suspension, in Lösung oder in flüssigen Monomeren durchgeführt werden. Als Suspensionsmittel eignen sich beispielsweise aliphatische Kohlenwasserstoffe. Bevorzugt wird das erfindungsgemäße Verfahren in Lösung durchgeführt, bevorzugt in Toluol als Lösungsmittel.

Hierbei hat es sich als besonders bevorzugt erwiesen, wenn man den Metallocenkomplex der allgemeinen Formel I (mit seinem Gegenion) bei Temperaturen im Bereich von -80 bis 110°C in Toluol suspendiert und die metalloceniumionenbildende Verbindung, ebenfalls vorzugsweise als toluolische Lösung, bei einem Druck von 0,5 bis 50 bar hinzugibt. Die eigentlichen Polymerisationsbedingungen sind an sich unkritisch, bevorzugt sind Temperaturen im Bereich von -50 bis 300°C, Drücke im Bereich von 0,5 bis 3000 bar und Reaktionszeiten von 0,1 bis 24 Stunden.

Die mittlere Molmasse der gebildeten Polymerisate kann mit den in der Polymerisationstechnik üblichen Methoden gesteuert werden, beispielsweise durch Zufuhr von Reglern wie Wasserstoff.

Als C₂- bis C₁₀-Alkene, die zur Polymerisation eingesetzt werden können, eignen sich insbesondere Ethylen, aber auch Propylen oder höhere Alk-1-en wie But-1-en, Pent-1-en und Hex-1-en. Unter dem Begriff Polymerisate werden sowohl Homo- als auch Copolymerisate verstanden.

Die Metallocenkomplexe der allgemeinen Formel I können nach dem erfindungsgemäßen Verfahren wiedergewonnen werden, indem man die Polymerisation durch Zugabe von Säuren abbricht und die Metallocenkomplexe der allgemeinen Formel I durch Extraktion aus der Reaktionsmischung wiedergewinnt.

Als Säuren eignen sich Verbindungen jeglicher Art, bei denen das Säureanion das Metallocenkation am Metall M stabilisieren kann, bevorzugt geht das Säureanion mit dem Metallocenkation am Metall M eine Bindung ein. Bevorzugte Säuren sind anorganische Säuren wie Halogenwasserstoffsäuren, insbesondere HCl. Es können aber auch organische Säuren wie Carbonsäuren beispielsweise Essigsäure oder substituierte Carbonsäuren, beispielsweise Trifluoressigsäure eingesetzt werden oder Mischungen verschiedener Säuren.

Die Säuren können in konzentrierter Form oder auch als wäßrige und/oder alkoholische Lösung eingesetzt werden.

Die Menge an Säure ist an sich unkritisch, es kann ein Molverhältnis von Säure zu Metallocenkomplex im Bereich von 10000000:1 bis 3:1, insbesondere 500000:1 bis 1000:1 eingesetzt werden.

Es hat sich als bevorzugt erwiesen, die Säure bei Raumtemperatur und Umgebungsdruck zuzugeben, es kann jedoch auch bei Temperaturen im Bereich von -80 bis 200°C und Drücken im Bereich von 0,1 bis 300 bar gearbeitet werden.

Die Extraktion wird üblicherweise in einem Lösungsmittel durchgeführt, wobei alle an sich bekannten, für die Extraktion geeigneten, Lösungsmittel eingesetzt werden können. Geeignete Lösungsmittel sind beispielsweise Wasser, aromatische Kohlenwasserstoffe wie Toluol, halogenierte Kohlenwasserstoffe, insbesondere chlorierte Kohlenwasserstoffe wie Chloroform oder Dichlormethan, Ether wie Diethylether oder auch Tetrahydrofuran oder Alkohole wie Methanol. Es können auch Mischungen verschiedener Lösungsmittel eingesetzt werden. Die Art des Lösungsmittels richtet sich nach der Art des Metallocenkomplexes. Bevorzugt wird jedoch Dichlormethan verwendet.

Die Mengen des zur Extraktion eingesetzten Lösungsmittels sowie die Temperatur und der Druck sind an sich unkritisch. Die Menge an Lösungsmittel kann im Bereich von 1 1 bis 0,1 1, bezogen auf 1 mmol Metallocenkomplex liegen, die Temperatur im Bereich von 20 bis 150°C, der Druck im Bereich von 0,1 bis 300 bar.

Nach der Extraktion kann der wiedergewonnene Metallocenkomplex der allgemeinen Formel I als Feststoff isoliert werden, indem man das Lösungsmittel entfernt und der Metallocenkomplex gegebenenfalls gewaschen wird.

Die nach dem erfindungsgemäßen Verfahren wiedergewonnenen Metallocenkomplexe der allgemeinen Formel I können erneut als aktive Katalysatorbestandteile zur Herstellung von Polymerisaten von C₂- bis C₁₀-Alkenen eingesetzt werden. Einzelheiten hierzu erübrigen sich, da der wiedergewonnene Metallocenkomplex analog dem frisch hergestellten Metallocenkomplex eingesetzt werden kann und somit auf das bereits Geschriebene verwiesen wird.

Als weiterer aktiver Katalysatorbestandteil wird auch hier eine metalloceniumionenbildende Verbindung (Komponente B)) eingesetzt, das Polymerisationsverfahren entspricht dem bereits geschilderten, wobei die Polymerisation durch Zugabe von Säuren abgebrochen werden kann. Das erfindungsgemäße Verfahren zur Wiedergewinnung von Metallocenkomplexen der allgemeinen Formel I kann mehrfach, bevorzugt bis zu 10 mal, hintereinander durchgeführt werden. Es können auch Mischungen mehrerer wiedergewonnener Metallocenkomplexe der allgemeinen Formel I eingesetzt werden oder auch Mischungen aus wiedergewonnenem Metallocenkomplex und frischem Metallocenkomplex, wobei sie bevorzugt die gleich chemische Struktur aufweisen. Das Mengenverhältnis an wiedergewonnenem Metallocenkomplex und frischem Metallocenkomplex kann in beliebigen Grenzen variieren.

Bei der Verwendung von wiedergewonnenem Metallocenkomplex der allgemeinen Formel I zur Herstellung von Polymerisaten von C₂- bis C₁₀-Alkenen wird ebenfalls, wie schon beschrieben, Ethylen als Monomer bevorzugt.

Das erfindungsgemäße Verfahren zur Wiedergewinnung von Metallocenkomplexen ist technisch einfach durchführbar, die teuren Komplexe können ohne aufwendige Aufarbeitung wieder eingesetzt werden, die Produktivitäten der Katalysatorsysteme, die wiedergewonnene Metallocenkomplexe als aktive Katalysatorbestandteile enthalten, sind vergleichbar mit Produktivitäten von Katalysatorsystemen, die frische Metallocenkomplexe als aktive Katalysatorbestandteile enthalten und die entstehenden Polymerisate sind nicht mit Metallocenkomplexen verunreinigt und weisen im übrigen Eigenschaften auf, die denjenigen Polymerisaten entsprechen, die mittels frischen Metallocenkomplexen hergestellt wurden.

### Beispiele

### Beispiele 1 und 2: Herstellung der Metallocenkomplexe I

Beispiel 1: Herstellung von

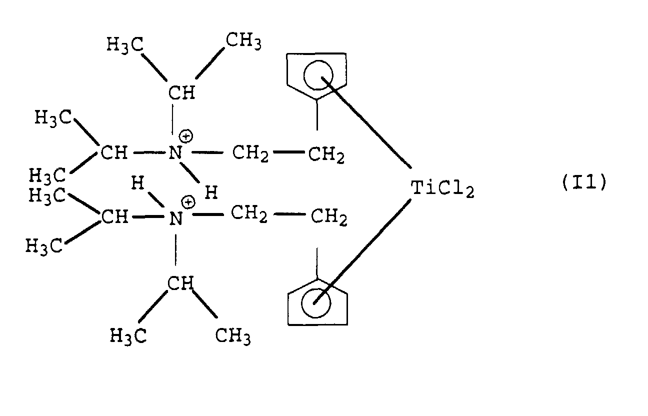

Zu einer Lösung von 1,92 g (10,1 mmol) TiCl₄ in 80 ml Toluol tropfte man bei -40°C eine Lösung von 20,2 mmol I' 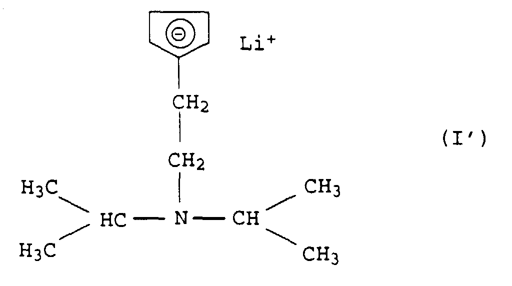 in 80 ml Diethylether (dargestellt aus 3,90 g (20,2 mmol) I* 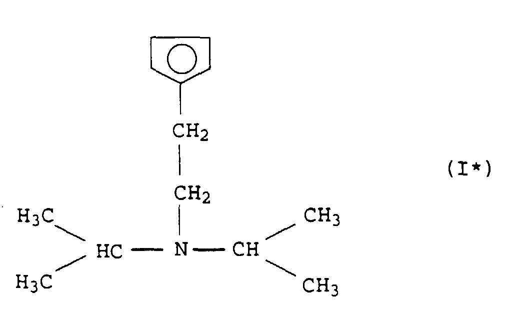 und 12,60 ml (20,2 mmol) einer 1.6 molaren n-Butyl-Lithium-Lösung in Diethylether). Anschließend ließ man das Reaktionsgemisch innerhalb von 6 h auf Raumtemperatur erwärmen und rührte weitere 10 h. Man dekantierte vom ausgefallenen Feststoff ab und wusch den Rückstand mit 2 x 30 ml kaltem (-40°C) Pentan. Man erhielt einen tiefroten Feststoff. Nach Umkristallisation aus Toluol erhielt man rote Kristalle. Ausb.: 2,50 g (49 %). Schmp.: 156°C (Zers.).

¹H-NMR (CDCl₃): δ = 0.92 (d, ³J = 6.5 Hz, 24H, CH-CH₃), 2,62 (m, 4H, Cp-CH₂), 2.69 (m, 4H, N-CH₂), 2.99 (m, 4H, CH-CH₃), 6.32 - 6.36 (m, 8H, Cp-H). ¹H-NMR (C₆D₆): δ = 0.90 (d, ³J = 6.6 Hz, 24H, CH-CH₃), 2.60 (m, 4H, Cp-CH₂), 2.93 (m, 8H, N-CH₂, CH-CH₃), 5.76 (m, 4H, Cp-H), 6.13 (m, 4H, Cp-H).

¹³C-NMR (C₆D₆): δ = 21.0 (CH-CH₃), 33.1 (Cp-CH₂), 45.6 (CH₂-N), 48.2 (CH-CH₃), 114.6, 122.9 (Ring-CH =), 136.7 (Ring = C-CH₂-CH₂).

MS (LSIMS) [m/z (rel. Int. %)]: 503 (3) [M⁺+1H], 468 (3) [M⁺-2Cl], 114 (100) [i(C₃H₇)₂NCH₂CH₂⁺], 65 (8) [C₅H₅⁺].

| | | | | |
|---|---|---|---|---|
| CHN: C₂₆H₄₄Cl₄N₂Ti (503.43). | Ber. | C 62.03 | H 8.80 | N 5.56 |
| | | | | |
| | Gef. | C 61.92 | H 8.68 | N 5.43 |
| | | | | |
| Cl-Analyse (nach Schöninger) | Ber. | 14.08 | Gef.: | 12.97 |

550 mg (1,09 mmol) dieses Produktes wurden mit 15 ml HCl-gesättigter Methanol-Lösung versetzt und 30 min. gerührt. Nach Entfernen des Lösungsmittels im Vakuum erhielt man einen rot-braunen Feststoff. Ausb.: 628 mg (quantitativ). Schmp.: 144°C (Zers.).

¹H-NMR (CD₃OD): δ = 1.39, 1.40 (2d, ³J = 6.6 Hz, 24H, CH-CH₃), 3.33 (m, 4H, Cp-CH₂), 3.56 (m, 4H, N-CH₂), 3.78 (m, 4H, CH-CH₃), 6.44 (m, 4H, Cp-H), 6.74 (m, 4H, Cp-H).

¹³C-NMR (CD₃OD): δ = 17.2, 18.8 (CH-CH₃), 29.2 (Cp-CH₂), 47.3 (CH₂-N), 56.5 (CH-CH₃), 115.8, 125.1 (Ring -CH=), 132.6 (Ring -CH=), 132.6 (Ring =C-CH₂-CH₂).

| | | | | |
|---|---|---|---|---|
| CHN: C₂₆H₄₆Cl₄N₂Ti (576.35). | Ber. | C 54.18 | H 8.04 | N 4.86 |
| | | | | |
| | Gef. | C 53.89 | H 8.30 | N 4.72 |
| | | | | |
| Cl-Analyse (nach Schöninger) | Ber. | 24.60 | Gef.: | 26.33 |

### Beispiel 2: Herstellung von

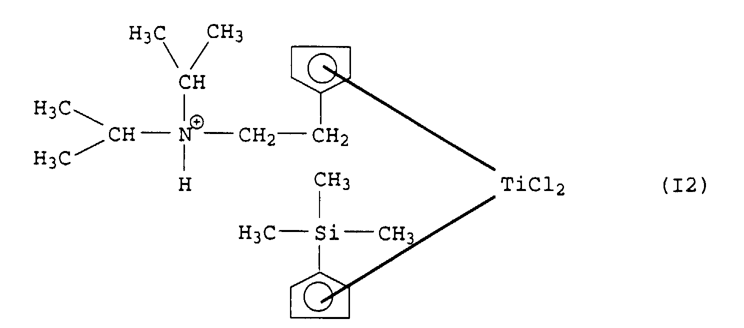

Zu einer Lösung von 1 g (3,43 mmol) (η⁵-C₅H₄Si(CH₃)₃)TiCl₃ in 40 ml Toluol tropfte man bei -30°C eine Lösung von 3,43 mmol I' in 20 ml Diethylether (dargestellt aus 0,66 g (3,43 mmol)I* und 2,14 ml (3,43 mmol) einer 1,6 molaren n-Butyl-Lithium-Lösung in Hexan). Anschließend ließ man das Reaktionsgemisch innerhalb von 1 h auf Raumtemperatur erwärmen und rührte weitere 5 h. Man dekantierte vom ausgefallenen Feststoff ab und wusch den Rückstand mit 2 x 20 ml kaltem Pentan. Man erhielt einen orange-roten Feststoff. Ausb.: 0,82 g (53 %), Schmp.: 170°C.

¹H-NMR(C₆D₆): δ = 0,30 (s, 9H, Si-CH₃), 0,89 (d, ³J = 5,5 Hz, 12H, CH-CH₃), 2,61 (m, 2H, Cp-CH₂), 2,93 (m, 4H, N-CH₂, CH-CH₃), 5,74, 6,12 (2m, 4H, Cp-H), 5,97, 6.46 (2m, 4H, Cp-H).

¹³C-NMR(C₆D₆): δ = 0,10 (Si-CH₃), 21,0 (CH-CH₃), 32,9 (Cp-CH₂), 45,6 (CH₂-N), 48,2 (CH-CH₃), 114,0, 124,3 (Cp⁻C), 119,1, 129,3 (Cp-C).

²⁹Si-NMR (C₆D₆): δ = -6,8 (Si-CH₃).

MS (CI) [m/z (rel. Int. %)]: 448 (0,5) [M⁺], 413 (l) [M⁺-Cl], 377 (5) [M⁺-2Cl], 114 (100) [i-(C₃H₇)₂NCH₂⁺].

| | | | | | |
|---|---|---|---|---|---|
| CHN | C₂₁H₃₅Cl₂NTiSi (448,38) | Ber. | C 56,25 | H 7,86 | N 3.12 |
| | | Gef. | C 56,34 | H 7,48 | N 2,41 |

350 mg (0,73 mmol) dieses Produktes wurden mit 10 ml HCl-gesättigter Methanol-Lösung versetzt und 30 min. gerührt. Nach Entfernen des Lösungsmittels im Vakuum wurde der Rückstand mit 2 x 20 ml Diethylether gewaschen. Man erhielt einen roten, amorphen, sehr hygroskopischen Feststoff. Nach Kristallisation aus CH₂Cl₂/Toluol erhielt man rote Kristalle. Ausb.: 300 mg (0,62 mmol, 85 %). Schmp.: 163°C (Zers.).

¹H-NMR (CD₃OD): δ = 0,25 (s, 9H, Si-CH₃), 1,40, 1,41 (2d, ³J = 6,6 Hz, 12H, CH-CH₃), 3,30 (m, 2H, Cp-CH₂), 3,60 (m, 2H, N-CH₂), 3,77 (m, 2H, CH-CH₃), 6,36 (t, ³J = 2,7 Hz, 2H, Cp-H), 6,76 (t, ³J = 2,5 Hz, 2H, Cp-H), 6,71 (t, ³J = 2,5 Hz, 2H, Cp-H), 6,93 (t, ³J = 2,5 Hz, 2H, Cp-H).

¹H-NMR (CD₃CN): δ = 0,23 (s, 9H, Si-CH₃), 1,35, 1,42 (2d, ³J = 6,6 Hz, 12H, CH-CH₃), 3,36 (m, 4H, Cp-CH₂, N-CH₂), 3,63 (m, 2H, CH-CH₃), 6,36 (t, ³J = 2,6 Hz, 2H, Cp-H), 6,60 (t ³J = 2,7 Hz, 2H, Cp-H), 6,70 (t, ³J = 2,5 Hz, 2H, Cp-H), 6,92 (t, ³J = 2,6 Hz, 2H, Cp-H).

¹H-NMR (CDCl₃): δ = 0,21 (s, 9H, Si-CH₃), 1,41, 1,49 (2d, ³J = 6,6 Hz, 12H, CH-CH₃), 3,50 (m, 4H, Cp-CH₂, N-CH₂), 3,64 (m, 2H, CH-CH₃), 6,23 (t, ³J = 2,6 Hz, 2H, Cp-H), 6,42 (t, ³J = 2,6 Hz, 2H, Cp-H), 6,61 (t, ³J = 2,3 Hz, 2H, Cp-H), 6,85 (t, ³J = 2,6 Hz, 2H, Cp-H), 11,2 (br. m, 1H, N-H).

¹³C-NMR (CD₃OD): δ = 0,0 (Si-CH₃), 17,4, 19,0 (CH-CH₃), 29,2 (Cp-CH₂), 47,6 (CH₂-N), 56,7 (CH-CH₃), 114,7, 126,5, 131,9 (Cp-C), 122,4, 130,1 134,7 (Cp-C).

²⁹Si-NMR (CD₃OD): δ = -6,09 (Si-CH₃),

| | | | | | |
|---|---|---|---|---|---|
| CHN | C₂₁H₃₆Cl₃NTiSi (484,84) | Ber. | C 52,02 | H 7,48 | N 2,88 |
| | | Gef. | C 52,50 | H 8,02 | N 2,93 |

### Beispiele 3 und 4: Herstellung von Polyethylen (PE) mit frischem Metallocenkomplex und Wiedergewinnung des Metallocenkomplexes

Die Metallocenkomplexe I1 und I2 (aus Beispiel 1 und 2) wurden jeweils bei Raumtemperatur in Toluol suspendiert. Unter Ethylenatmosphäre (1 bar) wurde jeweils Methylalumoxan (MAO) (10%ige Lösung in Toluol) dazugetropft. Nach 5 min wurde die Lösung durch entstehendes PE langsam trübe und erwärmte sich. Nach einer Reaktionszeit wurde die Polymerisation durch Zugabe von 500 ml methanolischer/wäßriger HCl gestoppt (400 ml Methanol, 100 ml konz. HCl). Das PE wurde abfiltriert, mit Wasser und Aceton in Beipiel 3, mit verdünnter HCl und Wasser in Beispiel 4 gewaschen und bis zur Gewichtskonstanz getrocknet. Das Filtrat wurde zur Trockene eingeengt und der Rückstand mit Dichlormethan extrahiert (in Beispiel 4 in einer Soxhlet-Apparatur). Nach Entfernen des Lösungsmittels und Waschen mit Diethylether wurde der jeweilige Metallocenkomplex als Feststoff isoliert.

### Beispiele 5 und 6: Herstellung von PE mit wiedergewonnenem Metallocenkomplex

Es wurde wie in den Beispielen 3 und 4 gearbeitet, jedoch wurden als Metallocenkomplexe I1 und I2 die aus den Beispielen 3 und 4 wiedergewonnenen Metallocenkomplexe I1W und I2W eingesetzt. Nachdem die Polymerisation durch Zugabe von 500 ml methanolischer/ wäßriger HCl wie in den Beispielen 3 und 4 gestoppt wurde, wurde das PE abfiltriert, mit Wasser und Aceton gewaschen und bis zur Gewichtskonstanz getrocknet.

### Vergleichsbeispiele V1 und V2: Herstellung von PE mit frischem Metallocenkomplex

Es wurde wie in den Beispielen 5 und 6 gearbeitet, jedoch wurden als Metallocenkomplexe I1 und I2 frische Metallocenkomplexe eingesetzt (aus Beispiel 1 und 2).

Die Mengen der Einsatzstoffe, die Reaktonszeiten und die Eigenschaften der entstandenen Polyethylene sind in der nachfolgenden Tabelle zusammengefaßt.

Der η-Wert wurde nach ISO 1628-3 bestimmt, die Gewichtsmittelwerte M_{w} und Zahlenmittelwerte Mₙ mittels Gelpermeationschromatographie.

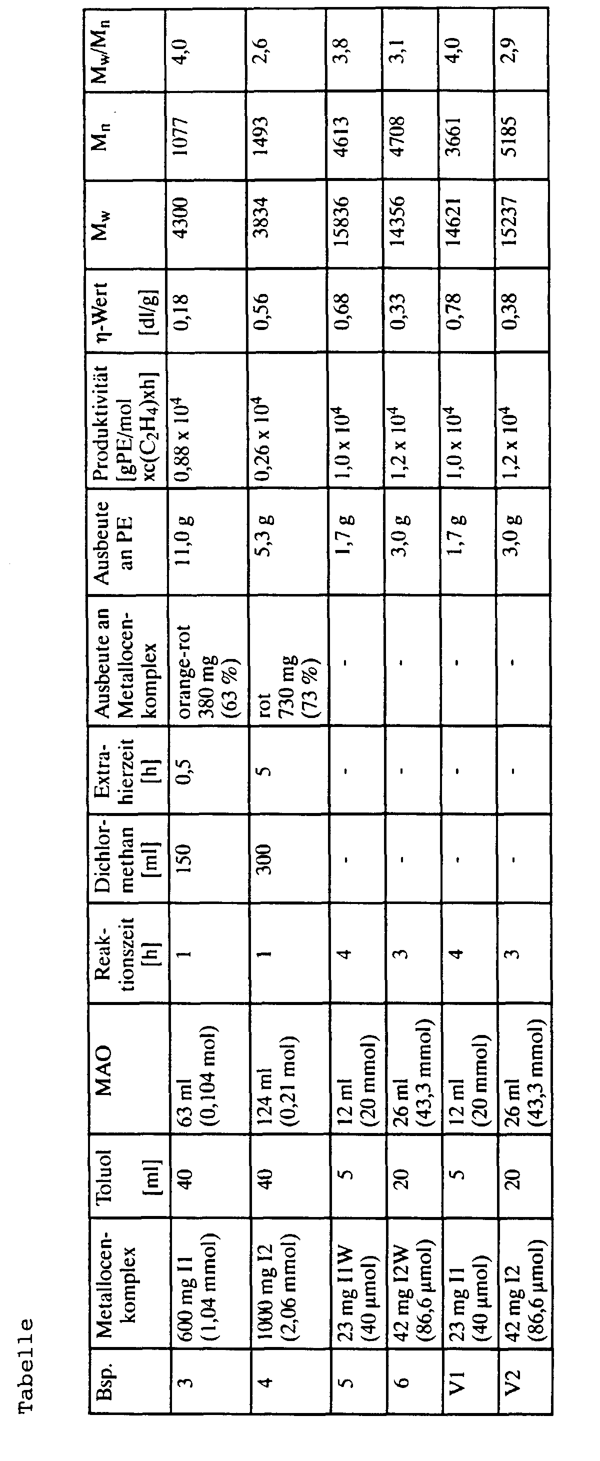

## Patentansprüche

1. Verfahren zur Wiedergewinnung von Metallocenkomplexen der allgemeinen Formel I 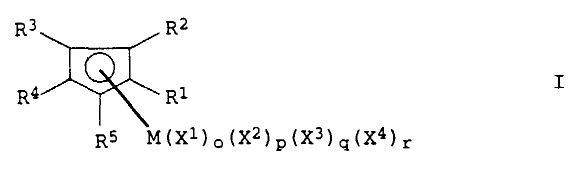 in der die Substituenten und Indices folgende Bedeutung haben:
M Titan, Zirkonium, Hafnium, Vanadium, Niob oder Tantal,
R¹ bis R⁴ Wasserstoff, C₁₋ bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, 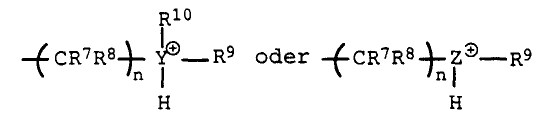
mit
R⁶ C₁- bis C₁₀-Alkyl, C₆- bis C₁₅-Aryl oder C₃- bis C₁₀-Cycloalkyl,
R⁷ und R⁸ Wasserstoff, C₁- bis C₁₀-Alkyl, C₆- bis C₁₅-Aryl oder C₃- bis C₁₀-Cycloalkyl,
R⁹ und R¹⁰ C₁- bis C₁₀-Alkyl, C₆- bis C₁₅-Aryl oder C₃- bis C₁₀-Cycloalkyl,
Y Stickstoff, Phosphor, Arsen, Antimon oder Wismut,
Z Sauerstoff, Schwefel, Selen oder Tellur,
n eine ganze Zahl im Bereich von 0 bis 10,
R⁵ 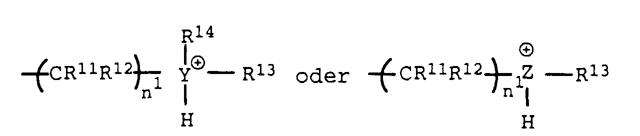
mit
R¹¹ und R¹² Wasserstoff, C₁- bis C₁₀-Alkyl, C₆- bis C₁₅-Aryl oder C₃- bis C₁₀-Cycloalkyl,
R¹³ und R¹⁴ C₁- bis C₁₀-Alkyl, C₆- bis C₁₅-Aryl oder C₃- bis C₁₀-Cycloalkyl,
n¹ eine ganze Zahl im Bereich von 0 bis 10,
X¹ bis X⁴ Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁵-, -NR¹⁵R¹⁶ oder 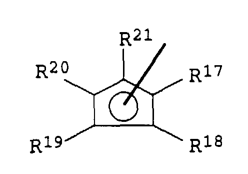
mit
R¹⁵ und R¹⁶ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
R¹⁷ bis R²¹ Wasserstoff, C₁- bis C₁₀-Alkyl, 5- bis 7-gliedriges Cycloalkyl, das seinerseits ein C₁-bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atomen aufweisende cyclische Gruppen stehen können, Si(R²²)₃, 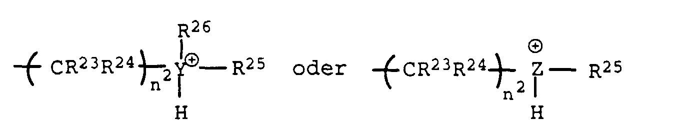
mit
R²² C₁- bis C₁₀-Alkyl, C₆- bis C₁₅-Aryl oder C₃- bis C₁₀-Cycloalkyl,
R²³ und R²⁴ Wasserstoff, C₁- bis C₁₀-Alkyl, C₆- bis C₁₅-Aryl oder C₃- bis C₁₀-Cycloalkyl,
R²⁵ und R²⁶ C₁- bis C₁₀-Alkyl, C₆- bis C₁₅-Aryl oder C₃- bis C₁₀-Cycloalkyl,
n² eine ganze Zahl im Bereich von 0 bis 10
und
o, p, q, r ganze Zahlen im Bereich von 0 bis 4, wobei die Summe o+p+q+r+1 der Wertigkeit von M entspricht,
die als aktive Katalysatorbestandteile bei der Herstellung von Polymerisaten von C₂- bis C₁₀-Alkenen eingesetzt waren, dadurch gekennzeichnet, daß man die Polymerisation durch Zugabe von Säuren abbricht und die Metallocenkomplexe der allgemeinen Formel I durch Extraktion aus der Reaktionsmischung wiedergewinnt.

2. Verfahren nach Anspruch 1, dadurch gekennzeichnet, daß M in der allgemeinen Formel I für Titan, Zirkonium oder Hafnium steht.

3. Verfahren nach den Ansprüchen 1 bis 2, dadurch gekennzeichnet, daß R⁵ in der allgemeinen Formel I für 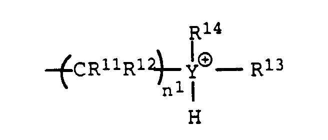 steht.

4. Verfahren nach den Ansprüchen 1 bis 3, dadurch gekennzeichnet, daß R⁵ in der allgemeinen Formel I 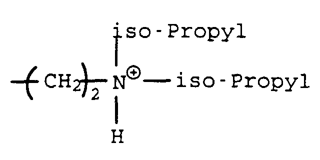 steht.

5. Verfahren nach den Ansprüchen 1 bis 4, dadurch gekennzeichnet, daß als Säuren anorganische Säuren verwendet werden.

6. Verfahren nach den Ansprüchen 1 bis 5, dadurch gekennzeichnet, daß die Metallocenkomplexe der allgemeinen Formel I als aktive Bestandteile bei der Herstellung von Polymerisaten von Ethylen eingesetzt waren.

7. Verwendung der gemäß den Ansprächen 1 bis 6 wiedergewonnenen Metallocenkomplexe der allgemeinen Formel I als aktive Katalysatorbestandteile zur Herstellung von Polymerisaten von C₂- bis C₁₀-Alkenen.

8. Verfahren zur Herstellung von Polymerisaten von C₂- bis C₁₀-Alkenen in Gegenwart von Katalysatorsystemen, dadurch gekennzeichnet, daß als Katalysatorsysteme solche eingesetzt werden, die als aktive Bestandteile
A) einen gemäß der Ansprüche 1 bis 6 wiedergewonnenen Metallocenkomplex der allgemeinen Formel I
und
B) eine metalloceniumionenbildende Verbindung enthalten.

9. Verfahren nach Anspruch 8, dadurch gekennzeichnet, daß als C₂- bis C₁₀-Alken Ethylen eingesetzt wird.

## Claims

1. A process for recovering metallocene complexes of the formula I 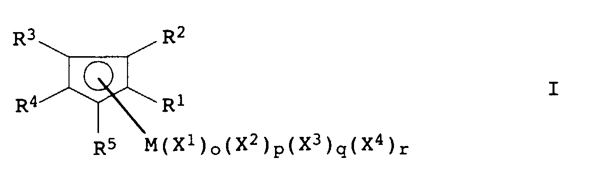 where
M is titanium, zirconium, hafnium, vanadium, niobium or tantalum,
R¹ to R⁴ are each hydrogen, C₁-C₁₀-alkyl, 5-7-membered cycloalkyl which in turn may carry C₁-C₁₀-alkyl as a substituent, C₆-C₁₅-aryl or arylalkyl, and two adjacent radicals together may furthermore form a cyclic group of 4 to 15 carbon atoms, Si(R⁶)₃, 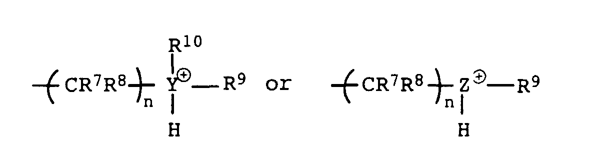
R⁶ is C₁-C₁₀-alkyl, C₆-C₁₅-aryl or C₃-C₁₀-cycloalkyl,
R⁷ and R⁸ are each hydrogen, C₁-C₁₀-alkyl, C₆-C₁₅-aryl or C₃-C₁₀-cycloalkyl,
R⁹ and R¹⁰ are each C₁-C₁₀-alkyl, C₆-C₁₅-aryl or C₃-C₁₀-cycloalkyl,
Y is nitrogen, phosphorus, arsenic, antimony or bismuth,
Z is oxygen, sulfur, selenium or tellurium,
n is an integer from 0 to 10,
R⁵ 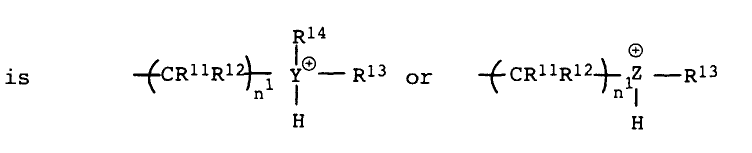
R¹¹ and R¹² are each hydrogen, C₁-C₁₀-alkyl, C₆-C₁₅-aryl or C₃-C₁₀-cycloalkyl,
R¹³ and R¹⁴ are each C₁-C₁₀-alkyl, C₆-C₁₅-aryl or C₃-C₁₀-cycloalkyl,
n¹ is an integer from 0 to 10,
X¹ to X⁴ are each fluorine, chlorine, bromine, iodine, hydrogen, C₁-C₁₀-alkyl, C₆-C₁₅-aryl, alkylaryl having 1 to 10 carbon atoms in the alkyl radical and 6 to 20 carbon atoms in the aryl radical, -OR¹⁵-, -NR¹⁵R¹⁶ or 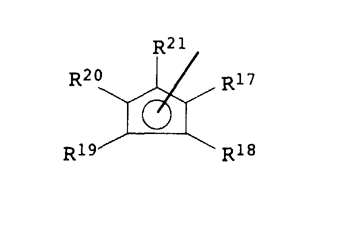
R¹⁵ and R¹⁶ are each C₁-C₁₀-alkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical,
R¹⁷ to R²¹ are each hydrogen, C₁-C₁₀-alkyl, 5-7-membered cycloalkyl which in turn may carry C₁-C₁₀-alkyl as a substituent, C₆-C₁₅-aryl or arylalkyl, and two adjacent radicals together may furthermore form a cyclic group of 4 to 15 carbon atoms, Si(R²²)₃, 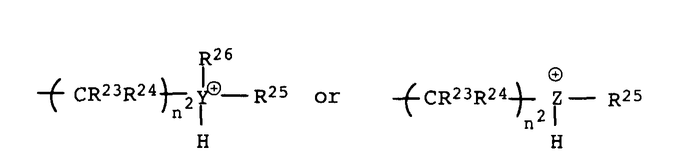
R²² is C₁-C₁₀-alkyl, C₆-C₁₅-aryl or C₃-C₁₀-cycloalkyl,
R²³ and R²⁴ are each hydrogen, C₁-C₁₀-alkyl, C₆-C₁₅-aryl or C₃-C₁₀-cycloalkyl,
R²⁵ and R²⁶ are each C₁-C₁₀-alkyl, C₆-C₁₅-aryl or C₃-C₁₀-cycloalkyl,
n² is an integer from 0 to 10
and
o, p, q, r are each an integer from 0 to 4, the sum o+p+q+r+1 corresponding to the valency of M,
which was used as an active catalyst component in the preparation of polymers of C₂-C₁₀-alkenes, wherein the polymerization is stopped by adding an acid and the metallocene complex of the formula I is recovered by extraction from the reaction mixture.

2. A process as claimed in claim 1, wherein M in the formula I is titanium, zirconium or hafnium.

3. A process as claimed in either of claims 1 and 2, wherein R⁵ in the formula I is

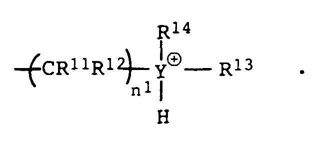

4. A process as claimed in any of claims 1 to 3, wherein R⁵ in the formula I is

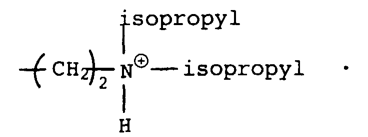

5. A process as claimed in any of claims 1 to 4, wherein the acid used is an inorganic acid.

6. A process as claimed in any of claims 1 to 5, wherein the metallocene complex of the formula I was used as an active component in the preparation of polymers of ethylene.

7. The use of a metallocene complex of the formula I, recovered as claimed in any of claims 1 to 6, as an active catalyst component for the preparation of polymers of C₂-C₁₀-alkenes.

8. A process for the preparation of polymers of C₂-C₁₀-alkenes in the presence of a catalyst system, wherein the catalyst system used is one which contains, as active components,
A) a metallocene complex of the formula I, recovered as claimed in any of claims 1 to 6,
and
B) a compound forming metallocenium ions.

9. A process as claimed in claim 8, wherein the C₂-C₁₀-alkene used is ethylene.

## Revendications

1. Procédé de récupération de complexes de métallocéne de la formule générale I : 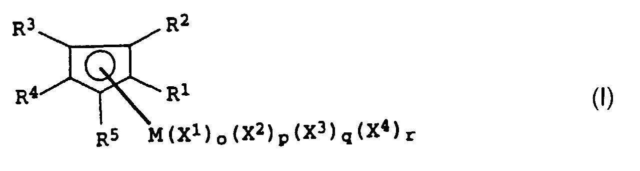 dans laquelle les substituants et symboles ont les significations suivantes :
M titane, zirconium, hafnium, vanadium, niobium ou tantale,
R¹ à R⁴ hydrogène, alkyle en C₁ à C₁₀, cycloalkyle pentagonal à heptagonal, qui a son tour peut porter un alkyle en C₁ à C₁₀ comme substituant, arylalkyle ou aryle en C₆ à C₁₅, deux radicaux voisins pouvant aussi éventuellement former conjointement des groupes cycliques présentant 4 à 15 atomes de C, Si(R⁶)₃, 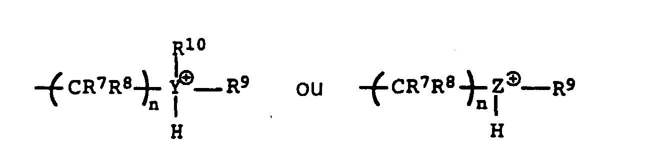 où
R⁶ alkyle en C₁ à C₁₀, aryle en C₆ à C₁₅ ou cycloalkyle en C₃ à C₁₀,
R⁷ et R⁸ hydrogène, alkyle en C₁ à C₁₀, aryle en C₆ à C₁₅ ou cycloalkyle en C₃ à C₁₀,
R⁹ et R¹⁰ alkyle en C₁ à C₁₀, aryle en C₆ à C₁₅ ou cycloalkyle en C₃ à C₁₀,
Y azote, phosphore, arsenic, antimoine ou bismuth,
Z oxygène, soufre, sélénium ou tellure,
n un nombre entier de l'ordre de 0 à 10,
R⁵ 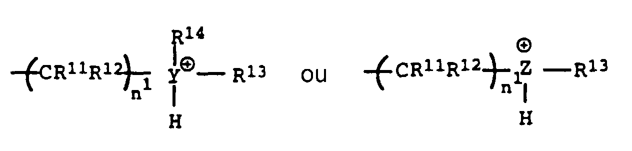 où
R¹¹ et R¹² hydrogène, alkyle en C₁ à C₁₀, aryle en C₆ à C₁₅ ou cycloalkyle en C₃ à C₁₀,
R¹³ et R¹⁴ alkyle en C₁ à C₁₀, aryle en C₆ à C₁₅ ou cycloalkyle en C₃ à C₁₀,
n¹ un nombre entier de l'ordre de 0 à 10,
X¹ à X⁴ fluor, chlore, brome, iode, hydrogène, alkyle en C₁ à C₁₀, aryle en C₆ à C₁₅, alkylaryle comportant de 1 à 10 atomes de C dans le radical alkyle et 6 à 20 atomes de C dans le radical aryle, -OR¹⁵-, -NR¹⁵R¹⁶ ou 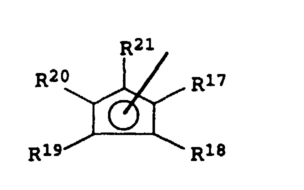 où
R¹⁵ et R¹⁶ alkyle en C₁ à C₁₀, aryle en C₆ à C₁₅, alkylaryle, arylalkyle, fluoroalkyle ou fluoroaryle comportant chacun 1 à 10 atomes de C dans le radical alkyle et 6 à 20 atomes de C dans le radical aryle,
R¹⁷ à R²¹ hydrogène, alkyle en C₁ à C₁₀, cycloalkyle pentagonal à heptagonal, qui à son tour peut porter un alkyle en C₁ à C₁₀ comme substituant, arylalkyle ou aryle en C₆ à C₁₅, deux radicaux voisins pouvant éventuellement aussi former conjointement des groupes cycliques présentant 4 à 15 atomes de C, Si(R²²)₃, 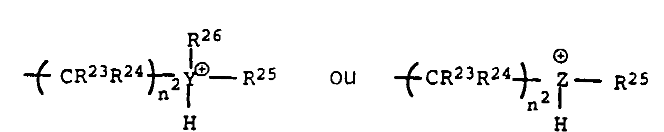 où
R²² alkyle en C₁ à C₁₀, aryle en C₆ à C₁₅ ou cycloalkyle en C₃ à C₁₀,
R²³ et R²⁴ hydrogène, alkyle en C₁ à C₁₀, aryle en C₆ à C₁₅ ou cycloalkyle en C₃ à C₁₀,
R²⁵ et R²⁶ alkyle en C₁ à C₁₀, aryle en C₆ à C₁₅ ou cycloalkyle en C₃ à C₁₀,
n² un nombre entier de l'ordre de 0 à 10,
et
o, p, q, r des nombres entiers de l'ordre de 0 à 4, la somme de o+p+q+r+1 correspondant à la valence de M,
qui ont été mis en oeuvre comme éléments catalytiques actifs lors de la fabrication de polymères d'alcènes en C₂ à C₁₀,
caractérisé en ce qu'on interrompt la polymérisation par addition d'acides et on récupère les complexes de métallocène de la formule générale I par extraction hors du mélange réactionnel.

2. Procédé suivant la revendication 1, caractérisé en ce que M dans la formule générale I représente du titane, du zirconium ou de l'hafnium.

3. Procédé suivant l'une des revendications 1 à 2, caractérisé en ce que R⁵ dans la formule générale I représente :

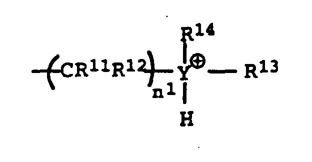

4. Procédé suivant l'une des revendications 1 à 3, caractérisé en ce que R⁵ dans la formule générale I représente

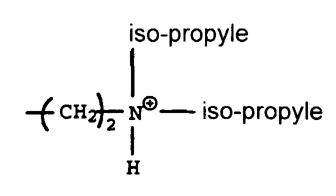

5. Procédé suivant l'une des revendications 1 à 4, caractérisé en ce que, comme acides, on utilise des acides inorganiques.

6. Procédé suivant l'une des revendications 1 à 5, caractérisé en ce que les complexes de métallocène de la formule générale I sont mis en oeuvre comme éléments actifs lors de la fabrication de polymères d'éthylène.

7. Utilisation des complexes de métallocène de la formule générale I, récupérés selon les revendications 1 à 6, comme éléments catalytiques actifs pour la fabrication de polymère d'alcènes en C₂ à C₁₀.

8. Procédé de préparation de polymères d'alcènes en C₂ à C₁₀ en présence de systèmes catalytiques, caractérisé en ce que, comme systèmes catalytiques, on met en oeuvre ceux qui contiennent, comme éléments actifs,
A) un complexe de métallocène de la formule générale I, récupéré selon l'une des revendications 1 à 6,
et
B) un composé générateur d'ions métallocénium.

9. Procédé suivant la revendication 8, caractérisé en ce que, comme alcène en C₂ à C₁₀, on met en oeuvre de l'éthylène.
